# EUROPÄISCHE PATENTSCHRIFT

(11) **EP 2 704 912 B1**
(45) Veröffentlichungstag und Bekanntmachung des Hinweises auf die Patenterteilung: **07.11.2018**
(21) Anmeldenummer: 12709589.1
(22) Anmeldetag: 13.03.2012
(51) Int. Cl.: B60G 11/27, F16F 9/05

(54) **ABROLLKOLBEN FÜR EINEN LUFTFEDERROLLBALG**
ROLLING PISTON FOR AN AIR SPRING ROLLING BELLOWS
PISTON DE DÉROULAGE POUR UN SOUFFLET ROULANT D'UN RESSORT PNEUMATIQUE

(30) Priorität: 04.05.2011 DE 102011050103
(43) Veröffentlichungstag der Anmeldung: 12.03.2014
(73) Patentinhaber: ContiTech Luftfedersysteme GmbH, 30165 Hannover (DE)
(72) Erfinder: OFFERMANN, Dieter, 30175 Hannover (DE); NEITZEL, Eckhard, 30161 Hannover (DE)
(74) Vertreter: Kilsch, Armin Ralph
(86) Internationale Anmeldenummer: PCT/EP2012/054321
(87) Internationale Veröffentlichungsnummer: WO 2012/150068

(56) Entgegenhaltungen:
- EP-B1- 1 862 335
- WO-A1-01/61207
- WO-A1-2007/104671
- WO-A1-2008/025517
- DE-A1- 4 230 249
- DE-A1-102005 052 801
- DE-A1-102007 035 640
- DE-U1- 20 023 582
- JP-A- 2002 303 346
- US-A- 5 382 006

## Beschreibung

Die Erfindung betrifft einen Abrollkolben für einen Luftfederrollbalg, ausgebildet als hohler Tauchkolben, wobei der Innenraum des Abrollkolbens mit dem Innenraum der Luftfeder in Verbindung steht. Der Abrollkolben besteht aus mindestens zwei Teilen und weist ein topfförmiges Kolbenunterteil auf und ein mit dem Kolbenunterteil luftdicht verbundenes und als Deckel ausgebildetes Kolbenoberteil.

Das Kolbenunterteil weist einen Boden sowie eine rotationssymmetrische Kolbenwandung auf, also im Wesentlichen eine senkrechte verlaufende zylindrische oder auch einmal leicht konische Kolbenwandung. Das Kolbenoberteil weist einen an die Kolbenwandung anschließenden Ringbereich oder Deckelwandung auf, sowie weitere Ringprofile und/oder Ringflansche zur Anlage und zum luftdichten Anschluss des Luftfederrollbalgs an den Abrollkolben.

Im Stand der Technik sind verschiedene Arten solcher Abrollkolben bekannt. Einerseits existieren relativ schwere Abrollkolben aus Stahlblech mit voll nutzbarem Innenvolumen und mit einem Endanschlag, d.h. einer so genannten Pufferstütze, nämlich einer Stütze für einen im Wesentlichen in Achsrichtung der Luftfeder wirkenden Anschlagpuffer. Der Abrollkolben aus Stahlblech wird als Tiefziehteil mit Konus-Dichtsitz für die Balgaufnahme hergestellt und weist ein eingeschweißtes Bodenteil mit aufgeschweißtem Stützrohr auf. Das gesamte Bauteil ist dementsprechend schwer und in der Herstellung teuer.

Andererseits existieren relativ leichte einteilige Kunststoffkolben mit nicht oder nur teilweise genutztem Innenvolumen und Endanschlag (Pufferstütze). Solche Konstruktionen weisen als Nachteil eine Komforteinbuße durch geringes nutzbares Kolbenluftvolumen auf. Die Federung ist dann relativ hart.

Weiterhin findet man im Stand der Technik auch zweiteiliger Kunststoffkolben mit nutzbarem Innenvolumen ohne Pufferstütze.

Die EP 1 862 335 B1 offenbart hierzu einen Luftfederkolben, der aus einem becherförmigen Teil und einem Abdeckteil besteht, welche im Bereich ihrer Wandungen stumpf verschweißt werden. Das becherförmigen Teil weist dabei eine Grundwand auf, die einen Einsatz zur Verbindung mit der Fahrzeugachse aufweist. Nachteilig hierbei ist der fehlende Endanschlag (Pufferstütze).

Die DE 10 2007 035 640 A1 offenbart einen als Hohlkörper ausgebildeten Tauchkolben für eine Luftfeder, der aus zwei luftdicht miteinander verbundenen Teilen besteht, nämlich aus einem topfförmigen Unterteil mit Boden und Mantel und aus einem Oberteil. Der Tauchkolben weist ein topfförmigen Unterteil aufweist, dass Boden und Mantelteil bildet. Der Tauchkolben weist auch ein Oberteil auf mit einem Anschlussrand für den Luftfederbalg. Unterteil und Oberteil sind miteinander mit einer abgedichteten Verbindung zusammengefügt.

Die JP 2002 303346 A offenbart eine Luftfeder mit einem Anschlagpuffer und einem Abrollkolben, bei dem der Kolben im Deckel eine Ausnehmung zur Aufnahme des Anschlagpuffers aufweist und insgesamt einteilig ausgebildet ist. Der Kolben weist eine mit dem Kolben verbundene Bodenplatte auf, wobei der Kolbeninnenraum mit dem Luftfederinnenraum über eine Bohrung verbunden ist. Der Kolben zeigt weiterhin einen zwischen der Aufnahme des Anschlagpuffers und dem Boden angeordnete, als Teil des einteiligen Kolbens ausgebildete Pufferstütze. Die einteilige Ausbildung von Kolbenwanderung, Kolbendeckel und Pufferstütze ist in der Herstellung etwas aufwendig. Die US 5 382 006 offenbart einen Kolben für eine Luftfeder, der aus drei Metallteilen hergestellt wird, nämlich aus zwei Pressteilen bzw. Tiefziehteilen und einem Rohr, und beschreibt damit ein anderes technisches Produkt als die hier betroffenen Kunststoffkolben.

Die DE 10 2005 052 801 A1offenbart eine Luftfeder, bei der nach einem bestimmten Einfederungsweg ein im Kolben befindliches Zusatzvolumen abgetrennt wird, indem Durchströmungsöffnungen mechanisch verschlossen werden. Das Verschließen erfolgt dadurch, dass ein speziell ausgeformter und die Öffnungen enthaltender Kolbendeckel in eine im Luftfederdeckel vorgesehene nach innen gerichtete Hülse eintaucht und dadurch die Öffnungen verschlossen werden.

Die WO 2007/104671 A1 offenbart eine Luftfeder, deren Kolben zweiteilig ausgebildet ist. Der untere Teil des Kolbens ist dabei mit einer besonderen Kontur versehenen, an die sich der Luftfederbalg bzw. die Rollfalte anlegen kann. Der untere Teil ist ebenfalls mit dem Boden zusammeneinteilig ausgebildet. Beide Kolbenteile sind vorzugsweise aus Kunststoff hergestellt und miteinander reibverschweißt.

Die DE 42 30 249 A1 offenbart eine Luftfeder für Fahrzeuge mit einem elastomeren Rollbalg und einem Abrollkolben, bei dem der Dichtsitz, auf dem der Rollbalg am Abrollkolben befestigt ist, mit segmentartigen Vorsprüngen versehen ist, mit denen das der Wulstring am Rollbalgende durch Kröpfen befestigt werden kann. Eine Pufferstütze ist zwar in der Zeichnung dargestellt, jedoch nicht näher spezifiziert.

Der Erfindung lag also die Aufgabe zu Grunde einen leichten und einfach herzustellenden Abrollkolbenkolben herzustellen, dessen Innenvolumen vollständig für die Federung nutzbar ist und bei dem auch ein Endanschlag/eine Pufferstütze integriert ist, d.h., bei dem eine Kombination von optimalem Luftvolumen und Komfort und die Bereitstellung eines integrierten internen Endanschlages im Luftfedersystem gelingt.

Gelöst wird diese Aufgabe durch die Merkmale des Hauptanspruchs. Weitere vorteilhafte Ausbildungen sind in den Unteransprüchen offenbart.

Dabei ist eine Stütze (Pufferstütze) für einen im Wesentlichen in Achsrichtung der Luftfeder wirkenden Anschlagpuffer im Abrollkolben integriert, die aus zwei zusammenwirkenden Teilen besteht.

Ein Teil der Stütze ist dabei als Teil des Kolbenoberteils ausgebildet und unterstützt eine im Kolbenoberteil angeformte und zentrisch innerhalb des Luftfederrollbalgs angeordnete Anschlags- oder Aufnahmefläche für einen innerhalb des Luftfederbalges angeordneten Anschlagpuffer.

Der andere Teil der Stütze ist als Teil des topfförmigen Kolbenunterteils und ausgehend von dessen Boden ausgebildet, wobei beide Stützenteile zur Aufnahme von im Wesentlichen axial wirkenden Kräften zusammenwirken.

Damit entsteht ein zweiteiliger Kolben, bestehend aus einem Oberteil mit integriertem Dichtkonus für Luftfederbalg und mit dem integriertem oberen Teil der Pufferstütze und einem becherförmigem Unterteil mit dem integriertem unteren Teil der Pufferstütze, bei luftdichter Verbindung von Oberteil und Unterteil zur Bildung des nutzbaren Innenvolumens. Insbesondere bei der Ausbildung des Kolbens aus Kunststoff, d.h. von Oberteil, Unterteil und Pufferstützenteilen aus diesem Material erhält man eine leicht bauende Konstruktion mit sehr guten Festigkeitseigenschaften.

Dadurch, dass Kolbenunterteil und Kolbenoberteil luftdicht, also fest miteinander verbunden sind, die beiden in Kolbenunterteil und Kolbenoberteil integrierten Stützenteile aber zur Aufnahme von im Wesentlichen axial wirkenden Kräften "nur" zusammen wirken, ergibt sich eine definierte statisch bestimmte Kraftaufnahme ohne die typischen und für Kunststoffmaterialien bei Dauerbelastung oft schädlichen Verspannungen innerhalb des Bauteils.

Die Stützenteile sind dabei rohrförmig ausgebildet und zentrisch innerhalb des Abrollkolbens angeordnet sind. Kurze Rohre sind auch in Längsrichtung enorm tragfähig und trotzdem als Hohlkörper sehr leicht.

Die luftdichte Verbindung zwischen Kolbenunterteil und Kolbenoberteil ist dabei als Schweiß- oder Schraubverbindung, ggf. mit Dichtung, am äußeren Kolbenmantel, d.h. am Außenumfang des Abrollkolbens ausgeführt, also an der Kolbenwandung, und nicht am Boden oder im Deckelbereich. Gerade bei Kunststoff bietet sich hier die leicht herzustellende Stumpfverschweißung durch Reibschweißen oder das Ultraschall-Schweißverfahren an. Man erhält so auf einfache Weise ohne umfangreiche Montagevorrichtungen eine luftdichte Verbindung von Oberteil und Unterteil zur Bildung des Innenvolumens.

Die zur Aufnahme von im Wesentlichen axial wirkenden Kräften zusammenwirkenden Stützenteile sind letztlich formschlüssig oder federnd miteinander verbunden. Formschlüssige Verbindung von oberem und unteren Teil der Pufferstütze, etwa ausgebildet als ineinandergreifende Spaltquerschnitte in Form von Kalotten, konkavkonvexen Formen oder Abstufungen in der Wandung/Rohrwandung können axiale Druckkräfte, aber auch in bestimmtem Maße mit Axialkräften einhergehende Querkräfte oder Momente übertragen, ohne eine ungünstige Beanspruchungssituation bzw. Verspannungen im gesamten Bauteil zu erzeugen.

Durch das Zusammenwirken der Verbindung der Stützenteile mit der ebenfalls vorhandenen und als Schweiß- oder Schraubverbindung ausgeführten luftdichten Verbindung zwischen Kolbenunterteil und Kolbenoberteil muss besonders darauf geachtet werden, solche Verspannungen zu vermeiden. Es ist natürlich in äquivalenter Weise möglich, auch die Stützenteile stoffschlüssig oder kraftschlüssig so miteinander zu verbinden, dass im Wesentlichen nur ein Zusammenwirken zur Aufnahme axialer Kräfte erfolgt, jedoch erfordert eine solche Auslegung eine überaus präzise und genaue Maßtolerierung der Bauteile und zusätzlich eine entsprechende Anpassung der geometrischen und materialspezifischen Ausbildung in den Verbindungsbereichen oder in ihrer Nachbarschaft, etwa im Sinne von Querkraftkompensationen etc. Dadurch erhöhen sich allerdings der konstruktive Aufwand und die Kosten für einen solchen Abrollkolben.

Die Tragfähigkeit der Stütze in Längsrichtung wird insbesondere auch durch eine weitere vorteilhafte Ausbildung erhöht, welche darin besteht, dass der rohrförmige Innenraum der Stützenteile mit rippenartigen Versteifungselementen ausgesteift ist. Damit lassen sich auch Querkräfte oder schräg einwirkende Pufferkräfte problemlos auffangen. Auch lässt sich mit einer solchen Ausbildung die Wandstärke der rohrförmigen Stützenteile ggf. weiter reduzieren.

Dieser Effekt wird bei weiteren vorteilhaften Ausbildungen noch dadurch erhöht, dass die rippenartigen Versteifungselemente sternförmig oder strahlenförmig angeordnet sind und dass rippenartige Versteifungselemente auch in den Ringräumen zwischen dem jeweiligen Stützenteil und Kolbenwandung oder Deckelwandung vorgesehen sind.

Eine weitere vorteilhafte Ausbildung besteht darin, dass der Boden des Kolbenunterteils mindestens ein Verbindungselement zum Anschluss des Abrollkolbens an Fahrwerk oder Karosserie aufweist. Damit lässt sich auf einfache Weise eine Sicherung gegen "Abheben" des Abrollkolbens erreichen.

Eine weitere besonders einfache und für eine sicherere Krafteinleitung vorteilhafte Ausbildung besteht darin, dass ein Verbindungselement zentrisch im Bereich des Stützenteiles angeordnet ist. Damit ist in den meisten Fällen ein einziges Verbindungselement ausreichend.

Eine weitere vorteilhafte Ausbildung im Sinne einer sicheren Kraftübertragung zu angrenzenden metallischen Bauteilen besteht darin, dass das Verbindungselement als in das Kunststoffmaterial eingespritzte metallische Gewindebuchse oder eingespritzter metallischer Gewindebolzen ausgebildet ist.

Eine weitere vorteilhafte Ausbildung besteht darin, dass der Boden des Kolbenunterteils mit einem domförmigen Rücksprung versehen ist. Ein solcher Rücksprung im Kolbenboden ermöglicht die Übertragung von Druck- und Querkräften ohne weitere Verbindungselemente, beispielsweise solche aus Metall, und erzeugt eine ringförmige Kraftübertragungsfläche, die in Zusammenwirken mit einem zentrisch im Bereich des Stützenteiles angeordneten Verbindungselement auch zur Aufnahme von Kipp-Momenten quer zur Achse geeignet ist. Weiterhin dient ein solche Rücksprung vorteilhafterweise auch der Zentrierung bei der Montage.

Eine weitere vorteilhafte Ausbildung besteht darin, dass der innerhalb des Luftfederbalges angeordneten Anschlagpuffer an der im Kolbenoberteil angeformten und zentrisch innerhalb des Luftfederrollbalgs am oberen ein Teil der Stütze angeordneten Anschlags- oder Aufnahmefläche angebunden ist. Damit vereinfacht sich der Montage- oder Konstruktionsaufwand für den Luftfederdeckel bzw. die obere Luftfederplatte und der Abrollkolben kann mit dem Anschlagpuffer als ein Bauteil zugeliefert werden (Reduktion der Einzelteile). Natürlich kann der Anschlagpuffer auch, wie bisher bei ähnlichen Konstruktionen im Stand der Technik üblich, auf der Innenseite des der Anschlags- oder Aufnahmefläche gegenüberliegenden Luftfederdeckels angeordnet werden.

Besonders vorteilhaft lässt sich der erfindungsgemäße Abrollkolben bei einer Luftfedereinrichtung für ein Fahrzeug verwenden.

Anhand eines Ausführungsbeispieles soll die Erfindung näher erläutert werden. Es zeigen
- Fig. 1: einen erfindungsgemäßen Abrollkolben für eine Luftfeder
- Fig. 2: eine weitere ähnliche Ausführung eines erfindungsgemäßen Abrollkolbens
- Fig. 3: einen Teilzusammenbau einer Federung mit einem erfindungsgemäßen Abrollkolben nach Fig. 1

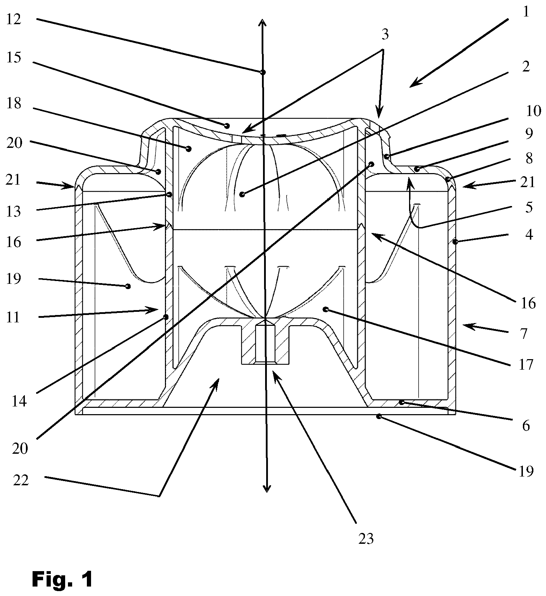

Die Fig. 1 zeigt einen Abrollkolben 1 für einen Luftfederrollbalg, ausgebildet als hohler Tauchkolben, wobei der Innenraum 2 des Abrollkolbens über die an der Außenschulter und in der Anschlags- oder Aufnahmefläche 15 angeordneten Bohrungen 3 mit dem Innenraum der hier nicht näher dargestellten Luftfeder in Verbindung steht.

Der vollständig aus Kunststoff gefertigte Abrollkolben 1 besteht aus zwei Teilen 4 und 5, nämlich aus einem topfförmigen Kolbenunterteil 4 und einem mit dem Kolbenunterteil 4 luftdicht verbundenen und als Deckel ausgebildeten Kolbenoberteil 5.

Das Kolbenunterteil 4 weist einen Boden 6 auf sowie eine rotationssymmetrische Kolbenwandung 7. Das Kolbenoberteil 5 weist einen an die Kolbenwandung 7 des Bodens anschließenden Ringbereich 8, d.h. eine Deckelwandung auf, sowie ein weiteres Ringprofil 9 und einen Ringflansch 10 zur Anlage und zum luftdichten Anschluss des Luftfederrollbalgs an den Abrollkolben 1.

Im Abrollkolben 1 ist eine Stütze 11 in Form einer Pufferstütze integriert, für einen im Wesentlichen in Achsrichtung 12 der Luftfeder wirkenden Anschlagpuffer am Luftfederdeckel, beide hier nicht näher dargestellt. Die Pufferstütze 11 besteht aus zwei zusammenwirkenden rohrförmigen Stützenteilen 13 und 14 und ist zentrisch innerhalb des Abrollkolbens 1 angeordnet

Das obere Stützenteil 13 ist als Teil des Kolbenoberteils 5 ausgebildet und unterstützt eine im Kolbenoberteil 5 angeformte und zentrisch innerhalb des Luftfederrollbalgs angeordnete Anschlags- oder Aufnahmefläche 15 für den innerhalb des Luftfederbalges angeordneten Anschlagpuffer.

Das andere, untere Stützenteil 14 ist als Teil des topfförmigen Kolbenunterteils 4 und ausgehend von dessen Boden 6 ausgebildet.

Beide Stützenteile 13 und 14 wirken zur Aufnahme von im Wesentlichen axial wirkenden Kräften zusammen und sind formschlüssig über gegeneinander gesetzte und ineinander greifende konkav-konvexe Formen miteinander verbunden. Diese Verbindung 16 ist hier ausgebildet als über den Wanddicken-Querschnitt der Stützenwand des oberen Stützenteils 13 verlaufende Kalotte oder Vertiefung, in die eine in der gegenüberliegenden Stützenwand des unteren Stützenteils 14 vorhandene kegelig vorspringende QuerschnittsAusbildung eingreift.

Der rohrförmige Innenraum der Stützenteile 13 und 14 ist mit rippenartigen und sternförmig angeordneten Versteifungselementen 17 und 18 ausgesteift.

Ebenfalls sind strahlenförmige rippenartige Versteifungselemente 19 und 20 in den Ringräumen zwischen den jeweiligen Stützenteilen 13 und 14 und der Kolbenwandung 7 oder Deckelwandung 8, dem Ringprofil 9 bzw. dem Ringflansch 10 angeordnet.

Die luftdichte Verbindung zwischen Kolbenunterteil 4 und Kolbenoberteil 5 ist hier als Stumpfschweißverbindung 21 der Kolbenwandungen 7 und 8 am äußeren Kolbenmantel ausgeführt. Die Stumpfschweißverbindung 21 ist hier auch kalottenförmig vorgebildet.

Der Boden 6 des Kolbenunterteils 4 ist mit einem domförmigen Rücksprung 22 versehen sowie mit einer Ausnehmung/Bohrung 23 zur Aufnahme eines Verbindungselementes zum Anschluss des Abrollkolbens 1 an das Fahrwerk, so dass das Verbindungselement zentrisch im Bereich des Stützenteiles 14 angeordnet ist.

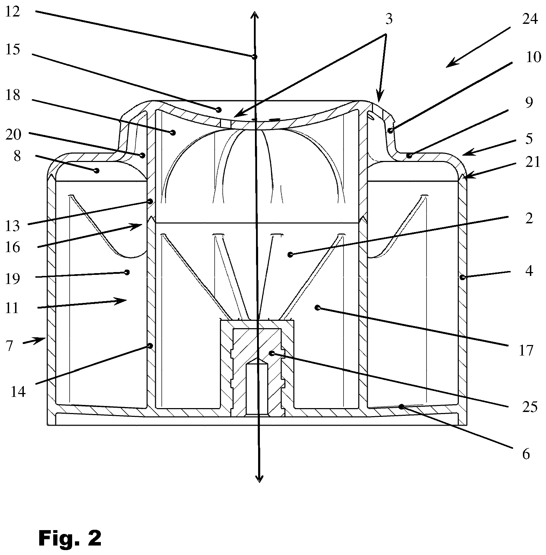

Fig. 2 zeigt eine weitere ähnliche Ausführung eines erfindungsgemäßen Abrollkolbens 24 ohne domförmigen Rücksprung, bei dem das Verbindungselement als in das Kunststoffmaterial des Kolbens eingespritzter metallischer Gewindebolzen 25 ausgebildet ist.

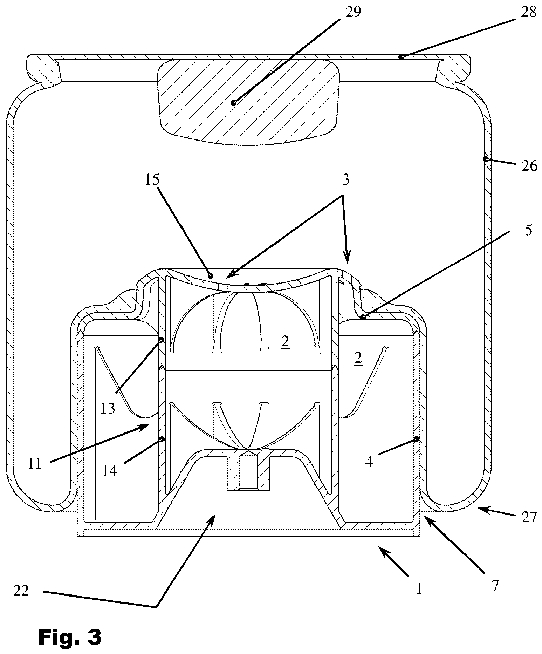

Fig. 3 zeigt einen Teilzusammenbau einer Federung für eine Luftfedereinrichtung für ein Fahrzeug mit einem Abrollkolben 1 gemäß Fig. 1.

An das Kolbenoberteil 5 ist der Luftfederrollbalg 26 luftdicht an den als Tauchkolben ausgebildeten Abrollkolben 1 angeschlossen und rollt beim Ein- und Ausfedern unter Bildung einer Rollfalte 27 am Außenumfang bzw. an der Kolbenwandung 7 des Abrollkolbens 1 ab.

Der Luftfederrollbalg 26 weist einen Luftfederdeckel 28 auf, an dem ein Anschlagpuffer 29 aus elastischem Material befestigt ist, der bei starkem Einfedern mit der im Kolbenoberteil 5 angeformten Anschlags- oder Aufnahmefläche 15 zusammenwirkt.

Dabei ist der Luftfederdeckel 28 mit einer hier nicht näher dargestellten Karosserie und der Boden 6 bzw. der domförmige Rücksprung 22 des Abrollkolbens 1 mit einem zugehörigen Fahrwerksteil eines Fahrzeuges verbunden.

### Bezugszeichenliste

### (Teil der Beschreibung)

- 1: Abrollkolben
- 2: Innenraum
- 3: Bohrungen
- 4: Kolbenunterteil
- 5: Kolbenoberteil
- 6: Boden
- 7: Kolbenwandung
- 8: Ringbereich
- 9: Ringprofil
- 10: Ringflansch
- 11: Pufferstütze
- 12: Achsrichtung
- 13: Oberes Stützenteil
- 14: Unteres Stützenteil
- 15: Aufnahmefläche für Anschlagpuffer
- 16: Kalottenförmige Verbindung
- 17: Versteifungselement
- 18: Versteifungselement
- 19: Versteifungselement
- 20: Versteifungselement
- 21: Stumpfschweißverbindung
- 22: Domförmiger Rücksprung
- 23: Bohrung für Verbindungselement
- 24: Abrollkolben
- 25: Gewindebolzen
- 26: Luftfederrollbalg
- 27: Rollfalte
- 28: Luftfederdeckel
- 29: Anschlagpuffer

## Patentansprüche

1. Abrollkolben aus Kunststoff (1) für einen Luftfederrollbalg, ausgebildet als hohler Tauchkolben, wobei der Innenraum (2) des Abrollkolbens (1) mit dem Innenraum der Luftfeder in Verbindung steht und folgende Merkmale aufweist:
- der Abrollkolben (1) besteht aus mindestens zwei Teilen und weist ein topfförmiges Kolbenunterteil (4) auf und ein mit dem Kolbenunterteil luftdicht verbundenes und als Deckel ausgebildetes Kolbenoberteil (5),
- das Kolbenunterteil (4) weist einen Boden (6) sowie eine rotationssymmetrische Kolbenwandung (7) auf,
- das Kolbenoberteil (5) weist einen an die Kolbenwandung anschließenden Ringbereich oder Deckelwandung (8) auf, sowie weitere Ringprofile (9) und/oder Ringflansche (10) zur Anlage und zum luftdichten Anschluss des Luftfederrollbalgs an den Abrollkolben,
- wobei eine Stütze (11) für einen im Wesentlichen in Achsrichtung der Luftfeder wirkenden Anschlagpuffer im Abrollkolben integriert ist, welche aus zwei zusammenwirkenden Teilen (13, 14) besteht,
- wobei ein Teil (13) der Stütze (11) als Teil des Kolbenoberteils (5) ausgebildet ist und eine im Kolbenoberteil (5) angeformte und zentrisch innerhalb des Luftfederrollbalgs angeordnete Anschlags- oder Aufnahmefläche (15) für einen innerhalb des Luftfederbalges angeordneten Anschlagpuffer unterstützt,
- wobei der andere Teil (14) der Stütze (11) als Teil des topfförmigen Kolbenunterteils (4) und ausgehend von dessen Boden (6) ausgebildet ist,
- wobei beide Stützenteile (13, 14) zur Aufnahme von im Wesentlichen axial wirkenden Kräften zusammenwirken,
- wobei die Stützenteile (13, 14) rohrförmig ausgebildet und zentrisch innerhalb des Abrollkolbens (1) angeordnet sind, und
- wobei die luftdichte Verbindung (21) zwischen Kolbenunterteil und Kolbenoberteil als Schweiß- oder Schraubverbindung am äußeren Kolbenmantel ausgeführt ist, wobei
- die zur Aufnahme von im Wesentlichen axial wirkenden Kräften zusammenwirkenden Stützenteile (13, 14) formschlüssig oder federnd miteinander verbunden sind.

2. Abrollkolben nach Anspruch 1, bei dem der rohrförmige Innenraum der Stützenteile (13, 14) mit rippenartigen Versteifungselementen (17, 18) ausgesteift ist.

3. Abrollkolben nach einem der Ansprüche 1 oder 2, bei dem rippenartige Versteifungselemente (19, 20) in den Ringräumen zwischen dem jeweiligen Stützenteil und Kolbenwandung oder Deckelwandung angeordnet sind.

4. Abrollkolben nach Anspruch 2 oder 3, bei dem die rippenartigen Versteifungselemente (17, 18, 19, 20) stern- oder strahlenförmig angeordnet sind.

5. Abrollkolben nach einem der Ansprüche 1 bis 4, bei dem der Boden (6) des Kolbenunterteils (4) mindestens ein Verbindungselement zum Anschluss des Abrollkolbens an Fahrwerk oder Karosserie aufweist.

6. Abrollkolben nach Anspruch 5, bei dem ein Verbindungselement zentrisch im Bereich des Stützenteiles (14) angeordnet ist.

7. Abrollkolben nach Anspruch 5 oder 6, bei dem das Verbindungselement als in das Kunststoffmaterial eingespritzte metallische Gewindebuchse oder eingespritzter metallischer Gewindebolzen (25) ausgebildet ist.

8. Abrollkolben nach einem der Ansprüche 1 bis 7, bei dem der Boden des Kolbenunterteils mit einem domförmigen Rücksprung (22) versehen ist.

9. Abrollkolben nach einem der Ansprüche 1 bis 8, bei dem der innerhalb des Luftfederbalges angeordneten Anschlagpuffer an der im Kolbenoberteil (5) angeformten und zentrisch innerhalb des Luftfederrollbalgs am oberen ein Teil (13) der Stütze (11) angeordneten Anschlags- oder Aufnahmefläche (15) oder am gegenüberliegenden Luftfederdeckel angebunden ist.

10. Luftfedereinrichtung für ein Fahrzeug mit einem Abrollkolben nach einem der Ansprüche 1 bis 9.

## Claims

1. Rolling piston consisting of plastic (1) for an air spring rolling bellows, said rolling piston being formed as a hollow plunger, wherein the interior space (2) of the rolling piston (1) is connected to the interior space of the air spring and has the following features:
- the rolling piston (1) is composed of at least two parts and has a pot-shaped piston lower part (4) and a piston upper part (5) which is connected in an air-tight manner to the piston lower part and which is in the form of a cover,
- the piston lower part (4) has a base (6) and a rotationally symmetrical piston wall (7),
- the piston upper part (5) has an annular region or cover wall (8) adjoining the piston wall and has further annular profiles (9) and/or annular flanges (10) for abutment of the air spring rolling bellows against, and air-tight connection of the air spring rolling bellows to, the rolling piston,
- wherein a support (11) for a stop buffer, which acts substantially in the axial direction of the air spring, is integrated in the rolling piston, said support being composed of two interacting parts (13, 14),
- wherein one part (13) of the support (11) is formed as part of the piston upper part (5) and supports a stop surface or receiving surface (15), integrally formed in the piston upper part (5) and arranged centrally within the air spring rolling bellows, for a stop buffer arranged within the air spring bellows,
- wherein the other part (14) of the support (11) is formed as part of the pot-shaped piston lower part (4) and so as to extend from the base (6) thereof,
- wherein the two support parts (13, 14) interact so as to absorb substantially axially acting forces,
- wherein the support parts (13, 14) are of tubular form and are arranged centrally within the rolling piston (1), and
- wherein the air-tight connection (21) between piston lower part and piston upper part is in the form of a welded or screw connection on the outer piston jacket, wherein
- the support parts (13, 14) which interact so as to absorb substantially axially acting forces are connected to one another in a positively locking or resilient manner.

2. Rolling piston according to Claim 1, in which the tubular interior space of the support parts (13, 14) is stiffened with rib-like stiffening elements (17, 18).

3. Rolling piston according to one of Claims 1 and 2, in which rib-like stiffening elements (19, 20) are arranged in the annular chambers between the respective support part and piston wall or cover wall.

4. Rolling piston according to Claim 2 or 3, in which the rib-like stiffening elements (17, 18, 19, 20) are arranged in a stellate or radial manner.

5. Rolling piston according to one of Claims 1 to 4, in which the base (6) of the piston lower part (4) has at least one connecting element for the connection of the rolling piston to a chassis or body.

6. Rolling piston according to Claim 5, in which a connecting element is arranged centrally in the region of the support part (14).

7. Rolling piston according to Claim 5 or 6, in which the connecting element is in the form of a metallic threaded bushing injection-molded into the plastics material or of a metallic threaded bolt (25) injection-molded into the plastics material.

8. Rolling piston according to one of Claims 1 to 7, in which the base of the piston lower part is provided with a dome-shaped set-back portion (22).

9. Rolling piston according to one of Claims 1 to 8, in which the stop buffer arranged within the air spring bellows is connected to the stop surface or receiving surface (15), which is integrally formed in the piston upper part (5) and which is arranged centrally within the air spring rolling bellows on the upper part (13) of the support (11), or to the opposite air spring cover.

10. Air spring device for a vehicle, having a rolling piston according to one of Claims 1 to 9.

## Revendications

1. Piston déroulant en matière plastique (1) pour un soufflet roulant de ressort pneumatique, réalisé sous la forme d'un piston plongeur creux, dans lequel l'espace intérieur (2) du piston déroulant (1) est en liaison avec l'espace intérieur du ressort pneumatique et présente les caractéristiques suivantes:
- le piston déroulant (1) se compose d'au moins deux parties et présente une partie inférieure de piston en forme de pot (4) et une partie supérieure de piston (5) assemblée de façon étanche à l'air à la partie inférieure de piston et réalisée sous la forme d'un couvercle,
- la partie inférieure de piston (4) présente un fond (6) ainsi qu'une paroi de piston à symétrie de révolution (7),
- la partie supérieure de piston (5) présente une région annulaire ou une paroi de couvercle (8) se raccordant à la paroi de piston, ainsi que d'autres profilés annulaires (9) et/ou brides annulaires (10) pour l'appui et pour le raccordement étanche à l'air du soufflet roulant de ressort pneumatique sur le piston déroulant,
- dans lequel un soutien (11) pour un tampon de butée agissant essentiellement dans la direction axiale du ressort pneumatique est intégré dans le piston déroulant, et se compose de deux parties qui coopèrent (13, 14),
- dans lequel une partie (13) du soutien (11) forme une partie de la partie supérieure de piston (5) et soutient une face de butée ou de réception (15) façonnée dans la partie supérieure de piston (5) et disposée au centre à l'intérieur du soufflet roulant de ressort pneumatique pour un tampon de butée disposé à l'intérieur du soufflet de ressort pneumatique,
- dans lequel l'autre partie (14) du soutien (11) forme une partie de la partie inférieure de piston en forme de pot (4) et est formée à partir du fond (6) de celle-ci,
- dans lequel les deux parties de soutien (13, 14) coopèrent pour reprendre des forces agissant essentiellement axialement,
- dans lequel les parties de soutien (13, 14) sont réalisées en forme de tubes et sont disposées au centre à l'intérieur du piston déroulant (1), et
- dans lequel l'assemblage étanche à l'air (21) entre la partie inférieure de piston et la partie supérieure de piston est réalisé sous forme d'assemblage soudé ou vissé sur l'enveloppe extérieure du piston, dans lequel
- les parties de soutien (13, 14) qui coopèrent pour recevoir des forces agissant essentiellement axialement sont assemblées par emboîtement ou de façon élastique l'une à l'autre.

2. Piston déroulant selon la revendication 1, dans lequel l'espace intérieur tubulaire des parties de soutien (13, 14) est renforcé par des éléments de renforcement (17, 18) en forme de nervures.

3. Piston déroulant selon une des revendications 1 ou 2, dans lequel des éléments de renforcement en forme de nervures (19, 20) sont disposés dans les espaces annulaires entre la partie de soutien respective et la paroi de piston ou la paroi de couvercle.

4. Piston déroulant selon la revendication 2 ou 3, dans lequel les éléments de renforcement en forme de nervures (17, 18, 19, 20) sont disposés en forme d'étoile ou de rayons.

5. Piston déroulant selon l'une quelconque des revendications 1 à 4, dans lequel le fond (6) de la partie inférieure de piston (4) présente au moins un élément de liaison pour l'assemblage du piston déroulant au châssis ou à la carrosserie.

6. Piston déroulant selon la revendication 5, dans lequel un élément de liaison est disposé au centre dans la région de la partie de soutien (14).

7. Piston déroulant selon la revendication 5 ou 6, dans lequel l'élément de liaison est formé par une douille filetée métallique ou un boulon fileté métallique (25) noyé(e) dans la matière plastique.

8. Piston déroulant selon l'une quelconque des revendications 1 à 7, dans lequel le fond de la partie inférieure de piston est muni d'une saillie rentrante (22) en forme de dôme.

9. Piston déroulant selon l'une quelconque des revendications 1 à 8, dans lequel le tampon de butée disposé à l'intérieur du soufflet de ressort pneumatique est relié à la face de butée ou de réception (15) formée dans la partie supérieure de piston (5) et disposée au centre à l'intérieur du soufflet roulant de ressort pneumatique sur la partie supérieure (13) du soutien (11) ou au couvercle de ressort pneumatique opposé.

10. Système de ressort pneumatique pour un véhicule muni d'un piston déroulant selon l'une quelconque des revendications 1 à 9.
